# EUROPEAN PATENT APPLICATION

(11) **EP 4 250 781 A1**
(43) Date of publication of application: **27.09.2023**
(21) Application number: 21902229.0
(22) Date of filing: 20.10.2021
(51) Int. Cl.: H04W 4/80, H04W 24/04, G06F 9/4401

(54) **SYSTEM SWITCHING METHOD AND APPARATUS, ELECTRONIC DEVICE, AND READABLE STORAGE MEDIUM**

(30) Priority: 08.12.2020 CN 202011424659
(71) Applicant: GUANGDONG OPPO MOBILE TELECOMMUNICATIONS CORP., LTD., Dongguan, Guangdong 523860 (CN)
(72) Inventor: SU, Wei, Dongguan, Guangdong 523860 (CN); LI, Qiming, Dongguan, Guangdong 523860 (CN); WANG, Liang, Dongguan, Guangdong 523860 (CN); ZHOU, Libin, Dongguan, Guangdong 523860 (CN)
(74) Representative: Taor, Simon Edward William
(86) International application number: PCT/CN2021/124887
(87) International publication number: WO 2022/121522

(57) **Abstract**

Provided are a system switching method and apparatus, an electronic device, and a computer-readable storage medium. When a second operating system is run by the electronic device, a first Bluetooth service is supported independently by the second operating system. When a first operating system is run by the electronic device, the first operating system is required to indirectly communicate with a Bluetooth module by means of the second operating system. When the first operating system is run by the electronic device, the first Bluetooth service is supported by the first operating system and the second operating system. Therefore, when the electronic device is switched from running the second operating system to running the first operating systemin response to a first instruction, a second processor running the second operating system is always in a communication connection with the Bluetooth module without a communication interruption.

## Description

### CROSS-REFERENCE TO RELATED APPLICATIONS

The present application claims priority to Chinese Patent Application No. 202011424659.1, titled "SYSTEM SWITCHING METHOD AND APPARATUS, ELECTRONIC DEVICE, AND COMPUTER-READABLE STORAGE MEDIUM", filed on December 08,2020 to China National Intellectual Property Administration, the entire disclosure of which is incorporated herein by reference.

### FIELD

The present disclosure relates to the field of computer technology, and more particularly, to a system switching method and apparatus, an electronic device, and a computer-readable storage medium.

### BACKGROUND

With the increasingly enhanced functions of electronic devices, the electronic device supporting a single operating system sometimes cannot satisfy people's requirements for the functions of the electronic device. Therefore, some electronic devices begin to support a dual system to provide a user with better usage experience.

However, when a Bluetooth service is used in an electronic device supporting a dual system, the Bluetooth service can be completely interrupted as the two systems are switched.

### SUMMARY

Embodiments of the present disclosure provide a system switching method and apparatus, an electronic device, and a computer-readable storage medium, with which the Bluetooth service will not be completely interrupted in a system switching process.

An embodiment of the present disclosure provides a system switching method. The method is performed by an electronic device including a first processor, a second processor, and a Bluetooth module. The first processor can run a first operating system. The second processor can run a second operating system. The first processor can be in a communication connection with the second processor. The Bluetooth module can be in a communication connection with the second processor. The method includes: supporting, by the second operating system, a first Bluetooth service when the second operating system is run by the electronic device; and in response to a first instruction, running, by the electronic device, the first operating system, and supporting, by both the first operating system and the second operating system, the first Bluetooth service when the first operating system is run by the electronic device.

An embodiment of the present disclosure provides a system switching apparatus. The apparatus is performed by an electronic device including a first processor, a second processor, and a Bluetooth module. The first processor can run a first operating system. The second processor can run a second operating system. The first processor can be in a communication connection with the second processor. The Bluetooth module can be in a communication connection with the second processor. The apparatus includes: a second operating-system running module configured to support, by the second operating system, a first Bluetooth service when the second operating system is run by the electronic device; and a first operating-system running module configured to run, by the electronic device and in response to a first instruction, the first operating system, and support, by both the first operating system and the second operating system, the first Bluetooth service when the first operating system is run by the electronic device.

An embodiment of the present disclosure provides an electronic device. The electronic device includes a memory having a computer program stored thereon, and a processor. The processor, when executing the computer program, implements operations of the Bluetooth communication method described above.

An embodiment of the present disclosure provides a computer-readable storage medium, having a computer program stored thereon. The computer program, when executed by a processor, implements operations of the Bluetooth communication method described above.

### BRIEF DESCRIPTION OF THE DRAWINGS

In order to clearly explain technical solutions of embodiments of the present disclosure, accompanying drawings used in description of embodiments are briefly described below. The accompanying drawings as described below are merely some embodiments of the present disclosure. Based on these accompanying drawings, other accompanying drawings can be obtained by those skilled in the art without creative effort.
FIG. 1 is a diagram illustrating an application environment diagram of a system switching method according to an embodiment of the present disclosure.
FIG. 2A is a flowchart of a system switching method according to an embodiment of the present disclosure.
FIG. 2B is a flowchart of a system switching method according to an embodiment of the present disclosure.
FIG. 3 is a diagram illustrating a hardware framework of a dual system in an electronic device according to an embodiment of the present disclosure.
FIG. 4 is a schematic diagram illustrating an architecture of a Bluetooth in a dual system according to an embodiment of the present disclosure.
FIG. 5 is a flowchart of a system switching method according to another embodiment of the present disclosure.
FIG. 6 is a flowchart of a system switching method according to yet another embodiment of the present disclosure.
FIG. 7A is a flowchart of a system switching method according to a specific embodiment of the present disclosure.
FIG. 7B is a flowchart of a system switching method according to another specific embodiment of the present disclosure.
FIG. 8 is a structural block diagram of a system switching apparatus according to another embodiment of the present disclosure.
FIG. 9 is a structural block diagram of a system switching apparatus according to an embodiment of the present disclosure.
FIG. 10 is a schematic diagram of an internal structure of an electronic device according to an embodiment of the present disclosure.

### DETAILED DESCRIPTION

In order to make the objects, technical solutions, and advantages of the present disclosure more apparent, the present disclosure will be described in detail with reference to the accompanying drawings and embodiments. It should be understood that the embodiments described here are only used to explain, rather than limiting, the present disclosure.

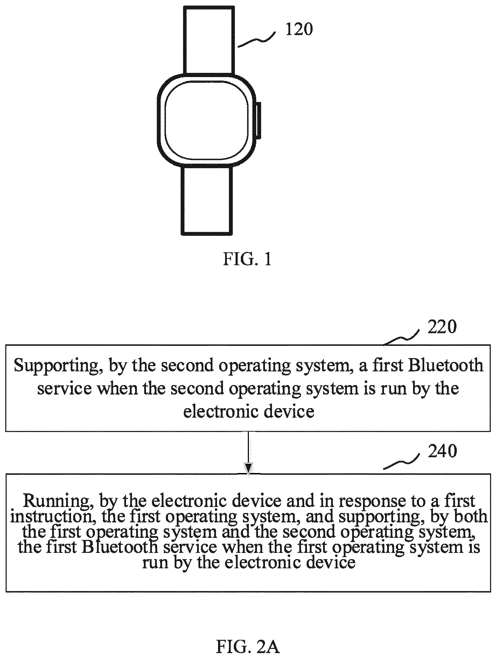

FIG. 1 is a diagram illustrating an application environment diagram of a system switching method according to an embodiment of the present disclosure. As illustrated in FIG. 1, the application environment includes an electronic device 120. The first operating system and the second operating system can be run simultaneously by the electronic device 120. The second operating system may only support a first Bluetooth service, or the first operating system and the second operating system can both support the first Bluetooth service. In the system switching method according to the present disclosure, when the second operating system is run by the electronic device 120, the first Bluetooth service is supported by the second operating system. The first operating system is run by the electronic device in response to a first instruction. When the first operating system is run by the electronic device, the first Bluetooth service is supported by the first operating system and the second operating system. The electronic device 120 can be any terminal device such as a mobile phone, a tablet computer, a personal digital assistant (PDA), a wearable device (such as a smartwatch, etc.), a smart home, etc.

In a conventional method, when a Bluetooth service is used in an electronic device supporting a dual system, it may occur that the Bluetooth service is completely interrupted with the switching between the two systems occurs. In some embodiments, in the conventional method, the Bluetooth service is completely separately implemented and independently operated in the dual system. That is, when the Bluetooth service is implemented on the first operating system, a central processing unit (CPU) running the first operating system is in a direct communication with a Bluetooth chip without depending upon the second operating system. Correspondingly, when the Bluetooth service is implemented on the second operating system, a CPU running the second operating system is also in direct communication with the Bluetooth chip without relying on the first operating system. The Bluetooth chip has a Bluetooth module for exerting a Bluetooth communication function.

In the conventional method, due to the only one rock-bottom Bluetooth chip, only when a Bluetooth service of a certain operating system is disenabled during system switching, a Bluetooth service of another operating system can be initialized, thereby completing the switching of the Bluetooth services. However, in the process that the Bluetooth service of the certain operating system is disenabled and the Bluetooth service of another operating system is initialized, a short complete interruption of the Bluetooth service may occur, failing to implement seamless switching of the Bluetooth services.

Therefore, the embodiments of the present disclosure provide a system switching method, in which the first operating system and the second operating system jointly support the first Bluetooth service or the second Bluetooth service and the second operating system support the first Bluetooth service, instead of completely separating Bluetooth services of different operating systems from each other. It should be understood that the first Bluetooth service is a basic service, and the second Bluetooth service is a superior service relying on the first Bluetooth service. That is, when the first Bluetooth service is implemented on the electronic device, the first Bluetooth service may be independently implemented by the second operating system of the electronic device, or the first Bluetooth service may also be implemented by the first operating system and the second operating system together. However, when the second Bluetooth service is implemented on the electronic device, the second Bluetooth service is required to be supported by both the first operating system and the second operating system.

In this way, the electronic device is switched from the second operating system to the first operating system in such a manner that: when it is monitored that the first operating system is awakened from a dormant state, other Bluetooth services other than the first Bluetooth service in the second Bluetooth service are enabled in the first operating system, and the first Bluetooth service continues to be supported in the second operating system.

The electronic device is switched from the first operating system to the second operating system in such a manner that: when it is monitored that the first operating system enters the dormant state, other Bluetooth services other than the first Bluetooth service in the second Bluetooth service are disenabled in the first operating system. In addition, the first operating system is controlled to be switched to the second operating system, and the first Bluetooth service continues to be supported in the second operating system. Regardless of whether the electronic device operates under the first operating system or the second operating system, the first Bluetooth service can be constantly supported by the second operating system in the background. Therefore, no matter how the system is switched, it will not occur that the Bluetooth service is completely interrupted during the system switching process.

FIG. 2A is a flowchart of a system switching method according to an embodiment of the present disclosure. As an example, the system switching method according to the present embodiment is applied on the electronic device 120 of FIG. 1. The electronic device includes a first processor, a second processor, and a Bluetooth module. The first processor can run a first operating system. The second processor can run a second operating system. The first processor can be in a communication connection with the second processor. The Bluetooth module can be in a communication connection with the second processor.

In some embodiments, as illustrated in FIG. 2A, a system switching method is provided. The method includes actions in blocks 220 to 240.

At block 220, when the second operating system is run by the electronic device, the first Bluetooth service is supported by the second operating system.

At block 240, in response to a first instruction, the first operating system is run by the electronic device, and the first Bluetooth service is supported by the first operating system and the second operating system when the first operating system is run by the electronic device.

It should be understood that the first Bluetooth service is a basic service, and the second Bluetooth service described below is a superior service relying on the first Bluetooth service. The first instruction can be an instruction transmitted from the second operating system to the first operating system. The first instruction carries awakening message and can awaken the first operating system based on the awakening message. After the first operating system is awakened, the electronic device is switched from the second operating system to the first operating system. In addition, an interface and application program of the electronic device running the second operating system may be different from that of the electronic device running the first operating system. For example, for Bluetooth, a Bluetooth Application 1 (APP1) is run in the second operating system, and a Bluetooth Application 2 (APP2) is run in the first operating system. However, when the Bluetooth APP1 is run in the second operating system, the first Bluetooth service can be supported by the second operating system. When the Bluetooth APP 2 is run in the first operating system, both the first operating system and the second operating system support the first Bluetooth service.

According to the embodiments of the present disclosure, the first processor can run the first operating system, and the second processor can run the second operating system. Since the Bluetooth module can be in a communication connection with the second processor, the second operating system can independently support the first Bluetooth service when the second operating system is run by the electronic device. In addition, the first processor is in a communication connection with the second processor, i.e., the first processor can only be in an indirect communication with the Bluetooth module through the second processor. Therefore, when the first operating system is run by the electronic device, the first operating system needs to be in an indirect communication with the Bluetooth module through the second operating system. That is, when the first operating system is run by the electronic device, the first operating system and the second operating system jointly support the first Bluetooth service. Therefore, when the electronic device is switched to run the first operating system from running the second operating system in response to the first instruction, the second processor running the second operating system is always in a communication connection with the Bluetooth module without a communication interruption, thereby preventing the Bluetooth service from being completely interrupted during the system switching.

In the above embodiment, the first operating system and the second operating system may further jointly support the second Bluetooth service.

According to the embodiments of the present disclosure, the first operating system and the second operating system can jointly support not only the first Bluetooth service but the second Bluetooth service. Moreover, when the second Bluetooth service is run on the electronic device, the second Bluetooth service is required to be supported by both the first operating system and the second operating system. It should be understood that the first Bluetooth service is the basic service, and the second Bluetooth service is the superior service relying on the first Bluetooth service. That is, when the first Bluetooth service is implemented on the electronic device, the first Bluetooth service can be independently implemented by the second operating system of the electronic device or implemented by both the first operating system and the second operating system. However, when the second Bluetooth service is implemented on the electronic device, it is required that the first operating system and the second operating system jointly support the second Bluetooth service.

In the embodiments of the present disclosure, regardless of whether the first operating system or the second operating system is currently run on the electronic device, the first Bluetooth service can be constantly supported by the second operating system in the background. Therefore, no matter how the system switches, it will not occur that the Bluetooth service is completely interrupted in the system switching process. In addition, the first operating system and the second operating system can jointly support the second Bluetooth service, to satisfy higher user's usage requirements.

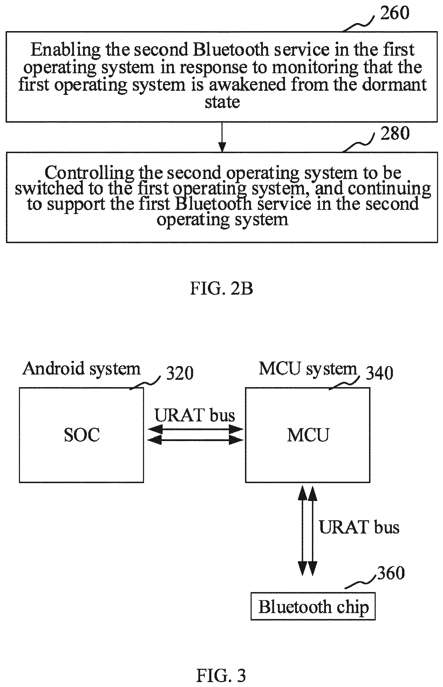

In an embodiment, as illustrated in FIG. 2B, a system switching method is further provided. The method includes actions in blocks 260 and 280.

At block 260, when it is monitored that the first operating system is awakened from the dormant state, the second Bluetooth service is enabled in the first operating system.

An endurance capacity is an increasingly important performance index for the electronic device. In order to solve an endurance problem of the electronic device, it becomes popular to employ a dual-system scheme in the electronic device to reduce power consumption. In general, one system (for example, a real-time operating system (RTOS) system) of the dual system has relatively low power consumption during operation, while the other system (such as an Android system) of the dual system has relatively high-power consumption, and these two systems are switchable. Therefore, the power consumption of the electronic device can be reduced by switching system. According to the embodiments of the present disclosure, the first operating system is run on the first processor, and the first processor has higher power consumption when running the first operating system; the second operating system is run on the second processor, and power consumption of the second operating system run on the second processor is lower than that of the first operating system run on the first processor. The first processor may be a system-on-a-chip (SOC), and the second processor may be a microcontroller unit (MCU), which are not limited in the embodiments of the present disclosure.

FIG. 3 is a diagram illustrating a hardware framework of a dual system in an electronic device according to an embodiment of the present disclosure. As illustrated in FIG. 3, the electronic device includes a SOC 320, an MCU 340, and a Bluetooth chip 360. The first operating system in the dual system can be run on the SOC 320, and the second operating system in the dual system can be run on the MCU 340. The Bluetooth chip 360 can implement a function of the Bluetooth module. The Bluetooth chip 360 can be in communication with the MCU 340 via a Universal Asynchronous Receiver/Transmitter (UART) bus. Then, the MCU 340 can be in communication with the SOC 320 via the UART bus. For example, the first operating system may be an Android operating system or an iOS system, and the second operating system may be an MCU system, which are not limited in the embodiments of the present disclosure. The SOC has a processor independent of the MCU and configured to process different tasks. As reflected in FIG. 3, since the SOC 320 is in an indirect communicate with the Bluetooth chip 360 through the MCU 340 instead of being in a direct communication with the Bluetooth chip 360, the electronic device has to depend on the MCU to enable certain Bluetooth services when the electronic device enables some Bluetooth services on the SOC.

For example, the Bluetooth services can be divided into the first Bluetooth service and the first Bluetooth service. The first operating system and the second operating system can jointly support the first Bluetooth service or the second Bluetooth service, and the first Bluetooth service is supported by the second operating system. It should be understood that the first Bluetooth service is the basic service, and the second Bluetooth service is the superior service relying on the first Bluetooth service. That is, when the first Bluetooth service is implemented on the electronic device, the first Bluetooth service can be independently implemented by the second operating system of the electronic device or implemented by the first operating system and the second operating system. However, when the second Bluetooth service is implemented on the electronic device, the second Bluetooth service is required to be supported by both the first operating system and the second operating system.

In some embodiments, when the electronic device monitors that the first operating system is awakened from the dormant state, in response to the first instruction, the electronic device is switched from the second operating system to the first operating system. In general, when the electronic device is in a screen-off state or a power saving mode or running no application, the first operating system is controlled to be in the dormant state, in order to reduce power consumption. When a high-performance service is a service currently processed in the electronic device, it is required to timely awaken the first operating system to process the high-performance service.

In this case, the second Bluetooth service is required to be enabled in the first operating system, such that the electronic device can support the second Bluetooth service after the first operating system is awakened from the dormant state.

At block 280, the second operating system is controlled to be switched to the first operating system, and the first Bluetooth service continues to be supported in the second operating system.

The electronic device controls the system running thereon to switch from the second operating system to the first operating system, and continues to support the first Bluetooth service in the second operating system. In this way, during the system switching, the second operating system can constantly support the first Bluetooth service, preventing the first Bluetooth service from being affected during the system switching and preventing the Bluetooth service from being completely interrupted.

According to the embodiments of the present disclosure, the second Bluetooth service is required to be jointly supported by the first operating system and the second operating system, and the first Bluetooth service is separately supported by the second operating system, such that the second operating system can constantly the first Bluetooth service during the system switching. Therefore, if it is monitored that the first operating system is awakened from the dormant state, the electronic device is required to be switched from the second operating system to the first operating system, and the first Bluetooth service continues to be supported in the second operating system, while the second Bluetooth service is enabled in the first operating system, thereby completing the system switching and enabling the first operating system and the second operating system to jointly support the second Bluetooth service. The second operating system can continue to support the first Bluetooth service during the system switching, such that the first Bluetooth service is not affected by the system switching, thereby preventing the Bluetooth service from being completely interrupted during the system switching.

In an embodiment, a protocol stack supporting the first Bluetooth service includes a second communication protocol stack running on the second operating system, and a protocol stack supporting the second Bluetooth service includes a first communication protocol stack running on the first operating system and the second communication protocol stack running on the second operating system. The second Bluetooth service jointly supported by the first communication protocol stack and the second communication protocol stack has higher performance than the first Bluetooth service supported by the second communication protocol stack.

In some embodiments, the protocol stack supporting the second Bluetooth service is divided into the first communication protocol stack and the second communication protocol stack in advance. The Protocol stack is a specific software implementation of a computer network protocol suite.

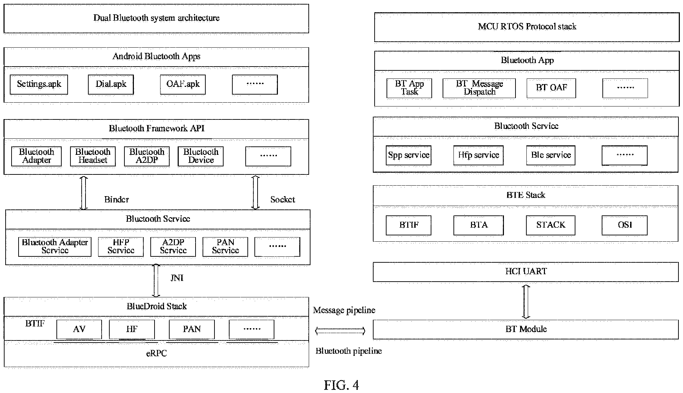

FIG. 4 is a schematic diagram illustrating an architecture of a Bluetooth in a dual system according to an embodiment of the present disclosure. The Bluetooth in the dual system includes a Bluetooth protocol stack and a Bluetooth module 426. The Bluetooth protocol stack includes a first communication protocol stack (BlueDriord Stack) 422 and a second communication protocol stack (BTE Stack) 444. The first communication protocol stack 422 is run on the first operating system, and the second communication protocol stack 424 is run on the second operating system. The first communication protocol stack 422 and the second communication protocol stack 424 each transmit data with the Bluetooth module 426 through a message pipeline or a Bluetooth pipeline. The Bluetooth pipeline is configured to transmit information related to the Bluetooth protocol stack, and the message pipeline is configured to transmit other information other than the information related to the Bluetooth protocol stack.

When implementing the second Bluetooth service, the electronic device controls the first communication protocol stack to run on the first operating system, and the second communication protocol stack to run on the second operating system, such that the first operating system and the second operating system can jointly support the second Bluetooth service. When implementing the first Bluetooth service, the electronic device only controls the second communication protocol stack to run on the second operating system, such that the second operating system can support the first Bluetooth service. The second Bluetooth service supported by both the first communication protocol stack and the second communication protocol stack has higher performance than the first Bluetooth service supported by the second communication protocol stack. The performance of the Bluetooth service can be measured or evaluated based on some performance indexes of the Bluetooth service, which is not specifically limited in the present disclosure.

According to the embodiments of the present disclosure, the protocol stack supporting the second Bluetooth service is divided into the first communication protocol stack and the second communication protocol stack in advance. When implementing the first Bluetooth service, the electronic device only controls the second communication protocol stack to run on the second operating system. When implementing the second Bluetooth service, the electronic device controls the first communication protocol stack to run on the first operating system, and controls the second communication protocol stack to run on the second operating system. By independently running the two protocol stacks on the two systems, after the first operating system enters the dormant state, the second operating system can still run the second communication stack to further support the first Bluetooth service during the system switching, so that the first Bluetooth service is not affected during the system switching, thereby preventing the Bluetooth service from being completely interrupted.

In an embodiment, the performance of the second Bluetooth service supported by both the first communication protocol stack and the second communication protocol stack is higher than the performance of the first Bluetooth service supported by the second communication protocol stack in that: a data size of the second Bluetooth service supported by both the first communication protocol stack and the second communication protocol stack is greater than a data size of the first Bluetooth service supported by the second communication protocol stack.

In some embodiments, the performance of the Bluetooth service can be measured or evaluated based on some performance indexes of the Bluetooth service. These performance indexes include data size, computation amount, etc., which are not limited in the embodiments of the present disclosure. For example, when the data size of the second Bluetooth service supported by both the first communication protocol stack and the second communication protocol stack is greater than the data size of the first Bluetooth service supported by the second communication protocol stack., it is considered that the performance of the second Bluetooth service is higher than that of the first Bluetooth service.

In the embodiments of the present disclosure, the second Bluetooth service is supported by both the first communication protocol stack and the second communication protocol stack, i.e., the first communication protocol stack is controlled to run on the first operating system, and the second communication protocol stack is controlled to run on the second operating system. The first Bluetooth service is supported by the second communication protocol stack, that is, only the second communication protocol stack is controlled to run on the second operating system. Since the second Bluetooth service is implemented by using two operating systems, i.e., by calling more resources, the second Bluetooth service have a greater data size is jointly processed by the two operating systems, and the first Bluetooth service having a smaller data size is processed only through the second operating system. In this way, uniform resource allocation is realized, thereby preventing the Bluetooth service from being completely interrupted while realizing the reduction of the power consumption of the electronic device.

In an embodiment, the second Bluetooth service includes at least one of a Bluetooth multimedia service and a Bluetooth internet service; and the first Bluetooth service includes at least one of a communication connection establishment service and a physiological data transmission service.

The performance of the second Bluetooth service is higher than that of the first Bluetooth service. For example, the data size of the second Bluetooth service is greater than that of the first Bluetooth service. In some embodiments, the second Bluetooth service includes at least one of the Bluetooth multimedia service and the Bluetooth internet service. The Bluetooth multimedia service includes at least one of Bluetooth call, Bluetooth music, Bluetooth video. The Bluetooth call may include a Bluetooth voice call or a Bluetooth video call, etc. The Bluetooth internet service refers to that the electronic device establishes an indirect communication connection with the Internet via a Bluetooth connection to access services of the Internet.

The first Bluetooth service includes at least one of the communication connection establishment service and the physiological data transmission service. The communication connection establishment service is a service for establishing a communication connection between the second operating system and the Bluetooth module. Therefore, after the smartwatch is powered on, the first operating system is run, and the second operating system is run at a low energy consumption in the background. A communication connection establishment service in the first Bluetooth service is first run in the second operating system to establish Bluetooth communication with the smart phone. When the smartwatch operates under the first operating system, the smartwatch can enable the second Bluetooth service via the Bluetooth communication connection. When the first operating system of the smartwatch enters the dormant state, the first communication protocol stack running in the first operating system is ended. The first operating system is controlled to be switched to the second operating system. In this case, the second operating system is run normally, and the second communication protocol stack continues to be run in the second operating system. In this case, the smartwatch can continue to support the first Bluetooth service.

The physiological data transmission service includes a service for transmitting at least one of heartbeat data, heart rate data, blood oxygen saturation data, and motion data. A data size of the heartbeat data, the heart rate data, the blood oxygen saturation data, and the motion data is smaller than that of the Bluetooth multimedia service and the Bluetooth internet service. The first Bluetooth service further includes a service for transmitting other data of a smaller data size. The embodiment of the present disclosure is not limited to this.

In the embodiments of the present disclosure, the performance of the second Bluetooth service is higher than that of the first Bluetooth service. The second Bluetooth service includes at least one of the Bluetooth multimedia service and the Bluetooth internet service. The first Bluetooth service includes at least one of the communication connection establishment service and the physiological data transmission service. The second Bluetooth service having the higher performance can be implemented by using the two operating systems, i.e., by calling resources, the second Bluetooth service having a greater data size is jointly processed by these two operating systems, and the first Bluetooth service having a smaller data size is only processed by the second operating system. In this way, the uniform resource allocation is realized, thereby preventing the Bluetooth service from being completely interrupted while realizing the reduction of the power consumption of the electronic device.

In an embodiment, said in response to the first instruction, running, by the electronic device, the first operating system includes: enabling, in response to the first instruction, the first operating system to enter an awakened state from a dormant state. In the awakened state of the first operating system, the first communication protocol stack is run on the first operating system, and the second communication protocol stack continues to run on the second operating system

In some embodiments, in response to the first instruction, the first operating system is awakened from the dormant state, then the first communication protocol stack is controlled to run on the first operating system, and the second communication protocol stack continues to be run on the second operating system.

When the first operating system on the electronic device is awakened from the dormant state, the first communication protocol stack is controlled to run on the first operating system, and the second communication protocol stack is controlled to run on the second operating system, allowing the first operating system and the second operating system to jointly support the second Bluetooth service.

In the embodiments of the present disclosure, in the dormant state of the first operating system, the first communication protocol stack on the first operating system is ended. In response to the first instruction, the electronic device enables the first operating system to enter the awakened state from the dormant state and starts the first communication protocol stack on the first operating system. Then, the first operating system is switched from the second operating system to be run on the electronic device, and the second communication protocol stack is controlled to continue to run on the second operating system.

Therefore, during the system switching, the first communication protocol stack is accurately started in the first operating system by controlling the protocol stack. In addition, the second Bluetooth protocol stack in the second operating system is controlled to continue to maintain normal running, thereby enabling the first operating system and the second operating system to jointly support the second Bluetooth service and preventing the Bluetooth service from being completely interrupted during the system switching.

In an embodiment, the method includes, before the first operating system is run on the electronic device in response to the first instruction: controlling, in the dormant state of the first operating system, the first communication protocol stack to stop running and the second communication protocol stack to run on the second operating system.

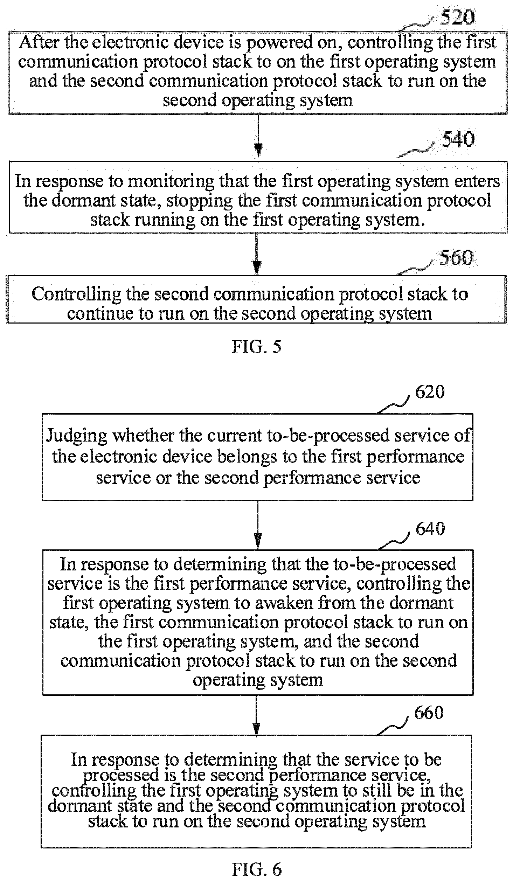

As illustrated in FIG. 5, a system switching method is provided, and the system switching method includes actions in blocks 520 to 560.

At block 520, after the electronic device is powered on, the first communication protocol stack is controlled to run on the first operating system, and the second communication protocol stack is controlled to run on the second operating system.

In some embodiments, after the electronic device is powered on, the first communication protocol stack is controlled to run on the first operating system, and the second communication protocol stack is controlled to run on the second operating system, enabling the first operating system and the second operating system to jointly support the second Bluetooth service, and enabling the second operating system to support the first Bluetooth service. That is, in this case, the electronic device can support not only the first Bluetooth service but the second Bluetooth service.

At block 540, in response to monitoring that the first operating system enters the dormant state, the first communication protocol stack is stopped running on the first operating system.

When it is detected that the first operating system enters the dormant state, various protocol stacks related to the first operating system are required to be ended, and the electronic device is switched to run the second operating system. The protocol stack supporting the second Bluetooth service is divided into the first communication protocol stack and the second communication protocol stack in advance. The first communication protocol stack is run on the first operating system, and the second communication protocol stack is run on the second operating system. Therefore, various protocol stacks related to the first operating system are required to be ended when the electronic device is switched from the first operating system to the second operating system. For the Bluetooth protocol stack, only the first communication protocol stack is required to ended, and the second communication protocol stack may not be ended.

At block 560, the second communication protocol stack is controlled to continue to run on the second operating system.

Therefore, after the first communication protocol stack is ended on the first operating system, the electronic device may control the second communication protocol stack to continue to run on the second operating system.

In the embodiments of the present disclosure, after the electronic device is powered on, the first communication protocol stack is controlled to run on the first operating system, and the second communication protocol stack is controlled to run on the second operating system. In this case, the electronic device can support not only the first Bluetooth service but the second Bluetooth service. When it is monitored that the first operating system enters the dormant state, the various protocol stacks related to the first operating system are required to be ended to switch the system. Thus, only the first communication protocol stack running on the first operating system is stopped, without affecting the second communication protocol stack running on the second operating system. In the system switching process, although the first communication protocol stack is ended and cannot support the second Bluetooth service, the second communication protocol stack can further normally run on the second operating system to support the first Bluetooth service, thereby avoiding the Bluetooth service from being completely interrupted during the system switching.

In an embodiment, said enabling, in response to the first instruction, the first operating system to enter the awakened state from the dormant state includes: determining, based on a service type of a current to-be-processed service, whether the first operating system enters the awakened state from the dormant state. The service type includes a first performance service and a second performance service, and the first performance service has a higher performance index than the second performance service.

In some embodiments, it is judged whether the current to-be-processed service belongs to the first performance service or the second performance service. The first performance service has a higher performance index than the second performance service. It is determined based on the judgment result whether to control the first operating system to be awakened from the dormant state.

In some embodiments, it is judged whether the current to-be-processed service of the electronic device belongs to the first performance service or the second performance service. The first performance service has a higher performance index than the second performance service. The performance index may include the data size, computation amount, etc., which are not limited in the embodiments of the present disclosure. The performance index of the first performance service is set to be higher than the performance index of the second performance service, such that different services can be divided into the first performance service or the second performance service in advance based on the service type to form a corresponding relation data table. The service type of the current to-be-processed service is obtained and checked in the corresponding relation data table to judge whether the current to-be-processed service of the electronic device belongs to the first performance service or the second performance service. Thus, it can be determined based on the judgement result whether the first operating system shall be controlled to awaken from the dormant state.

In the embodiments of the present disclosure, when the first performance service has a higher performance index than the second performance service, it is judged whether the current to-be-processed service is the first performance service or the second performance service, and it is determined based on the judgement result whether the first operating system shall be controlled to awaken from the dormant state. Therefore, based on the performance index of the to-be-processed service, the first operating system can be accurately controlled to awaken from the dormant state, thereby avoiding a case that the first operating system fails to be awakened in time.

In an embodiment, said determining, based on the service type of the current to-be-processed service, whether the first operating system enters the awakened state from the dormant state includes: determining, when the to-be-processed service is the first performance service, that the first operating system enters the awakened state from the dormant state, and enabling the first communication protocol stack to run on the first operating system and the second communication protocol stack to run on the second operating system; and determining, when the to-be-processed service is the second performance service, that the first operating system is still in the dormant state, and enabling the second communication protocol stack to run on the second operating system.

As illustrated in FIG. 6, a system switching method is provided. The system switching method includes actions in blocks 620 to 660.

At block 620, it is judged whether the current to-be-processed service of the electronic device belongs to the first performance service or the second performance service.

The performance index of the first performance service is set to be higher than the performance index of the second performance service, such that different services can be divided into the first performance service or the second performance service in advance based on the service type to form a corresponding relation data table. The service type of the current to-be-processed service is obtained and checked in the corresponding relation data table to judge whether the current to-be-processed service of the electronic device belongs to the first performance service or the second performance service.

At block 640, in response to determining that the to-be-processed service is the first performance service, the first operating system is controlled to awaken from the dormant state, the first communication protocol stack is controlled to run on the first operating system, and the second communication protocol stack is controlled to run on the second operating system.

When it is determined that the to-be-processed service of the electronic device is the first performance service, due to the higher performance index of the first performance service than the second performance service, the first performance service can be regarded as the high-performance service. Thus, the first operating system is controlled to awaken from the dormant state, the first communication protocol stack is controlled to run on the first operating system, and the second communication protocol stack is controlled to run on the second operating system. In this case, the electronic device can normally support various functions (including but not limited to the Bluetooth service), such as a WiFi function.

At block 660, in response to determining that the to-be-processed service is the second performance service, the first operating system is controlled to still be in the dormant state, and the second communication protocol stack is controlled to run on the second operating system.

When it is determined that the to-be-processed service is the second performance service, due to the higher performance index of the first performance service than the second performance service, the first operating system is controlled to further in the dormant state, and the second performance service can be regarded as a low-performance service, compared to the above-mentioned high-performance service.

In the embodiments of the present disclosure, it is judged whether the to-be-processed service of the electronic device is the high-performance service or the low-performance service. When the to-be-processed service is determined to be the high-performance service, the first operating system is controlled to awaken from the dormant state, the first communication protocol stack is controlled to run on the first operating system, and the second communication protocol stack is controlled to run on the second operating system. When the to-be-processed service is determined to be the low-performance service, the first operating system is controlled to be further in the dormant state, and the second communication protocol stack is controlled to run on the second operating system. Based on the determination of whether the to-be-processed service of the electronic device is the high-performance service, it is determined whether the electronic device needs to be awakened from the dormant state, and the first Bluetooth protocol stack is enabled accordingly. Therefore, the requirement for supporting the high-performance service on the electronic device can satisfied by switching the system, and meanwhile, it can be avoided that the Bluetooth service is completely interrupted.

In an embodiment, said enabling the first operating system to enter the awakened state from the dormant state includes: transmitting the first instruction to the first operating system through the second operating system; and controlling, in response to the first instruction, the first operating system to enter the awakened state from the dormant state.

In the embodiments of the present disclosure, the first instruction carries an awakening message. When the first operating system is required to be controlled to enter the awakened state from the dormant state, the first instruction is transmitted to the first operating system through the second operating system, and thus the first operating system is controlled to awaken from the dormant state in response to the first instruction. By transmitting the first instruction to the first operating system through the second operating system, the system switching can be accurately performed.

In an embodiment, the method further includes, subsequent to said in response to the first instruction, running, by the electronic device, the first operating system: determining, based on a service type of a current to-be-processed service, whether the first operating system enters an awakened state from a dormant state, in which the to-be-processed service includes a first performance service and a second performance service, and in which the first performance service has a higher performance index than the second performance service; determining, when the to-be-processed service is the first performance service, that the first operating system is still in the awakened state, and enabling the first communication protocol stack to run on the first operating system and the second communication protocol stack to run on the second operating system; and determining, when the to-be-processed service is the second performance service, that the first operating system enters the dormant state from the awakened state, and controlling the first communication protocol stack to stop running and the second communication protocol stack to run on the second operating system.

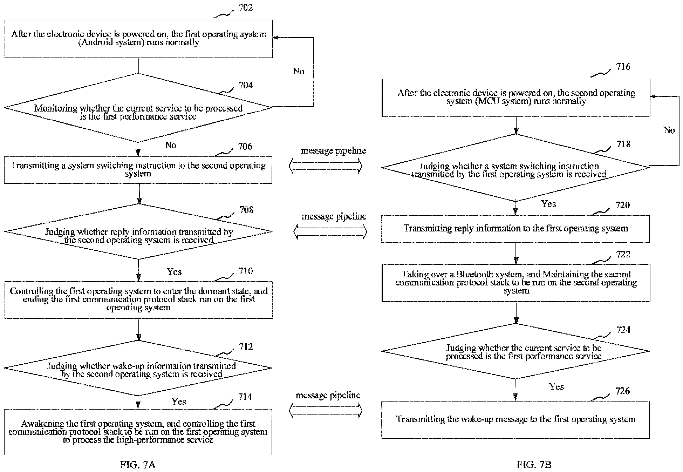

As illustrated in FIG. 7A, a system switching method is provided. The system switching method is performed by an electronic device having a dual system, and includes actions in blocks 702 to 714, when described based on a first operating system.

At block 702, after the electronic device is powered on, the first operating system (Android system) runs normally.

At block 704, it is monitored whether the current to-be-processed service is the first performance service. When the current to-be-processed service is not the first performance service, action in block 706 is performed. When the current to-be-processed service is the first performance service, action in block 702 is performed.

At block 706, a system-switching instruction is transmitted to the second operating system.

At block 708, it is judged whether reply message transmitted through the second operating system is received. When the reply message transmitted through the second operating system is received, action in block 710 is performed.

At block 710, the first operating system is controlled to enter the dormant state, and the first communication protocol stack running on the first operating system is ended.

At block 712, it is judged whether awakening message transmitted through the second operating system is received. When the awakening message transmitted through the second operating system is received, action in block 714 is performed.

At block 714, the first operating system is awakened, and the first communication protocol stack is controlled to run on the first operating system to process the high-performance service.

As illustrated in FIG. 7B, a system switching method is provided. The system switching method is performed by an electronic device having a dual system, and includes actions in blocks 716 to 726, when described based on a second operating system.

At block 716, after the electronic device is powered on, the second operating system (MCU system) runs normally.

At block 718, it is judged whether a system-switching instruction transmitted by the first operating system is received. When the system-switching instruction transmitted by the first operating system is received, action in block 720 is performed. When no system-switching instruction transmitted by the first operating system is received, action in block 716 is performed.

At block 720, reply message is transmitted to the first operating system.

At block 722, a Bluetooth system is taken over, and the second communication protocol stack is maintained to run on the second operating system.

At block 724, it is judged whether the current to-be-processed service is the first performance service. When the current to-be-processed service is the first performance service, action in block 726 is performed.

At block 726, the awakening message is transmitted to the first operating system.

In the embodiments of the present disclosure, the system-switching instruction is transmitted to the second operating system by the first operating system, and the reply message is transmitted to the first operating system through the second operating system, which enables the first operating system to be accurately switched to the second operating system. After the system switching, it is judged in real time whether the current to-be-processed service of the electronic device is the first performance service. When the current to-be-processed service of the electronic device is the first performance service, the awakening message is timely transmitted to the first operating system through the second operating system, so that the first operating system can be awakened in time to process the high-performance service. Therefore, the system can be timely switched to process services having different performances.

An embodiment provides a system switching apparatus 800. An electronic device includes a first processor, a second processor, and a Bluetooth module. The first processor can run a first operating system. The second processor can run a second operating system. The first processor can be in a communication connection with the second processor. The Bluetooth module can be in a communication connection with the second processor. The apparatus includes a second operating-system running module 820 and a first operating-system running module 840.

The second operating-system running module 820 is configured to support, by the second operating system, a first Bluetooth service when the second operating system is run by the electronic device.

The first operating-system running module 840 is configured to run, by the electronic device and in response to a first instruction, the first operating system, and support, by means of the first operating system and the second operating system, the first Bluetooth service when the first operating system is run by the electronic device.

In an embodiment, the first operating system and the second operating system can jointly support a second Bluetooth service.

In an embodiment, a protocol stack supporting the first Bluetooth service includes a second communication protocol stack running on the second operating system, and a protocol stack supporting the second Bluetooth service includes a first communication protocol stack running on the first operating system and the second communication protocol stack running on the second operating system. The performance of the second Bluetooth service supported by both the first communication protocol stack and the second communication protocol stack is higher than performance of the first Bluetooth service supported by the second communication protocol stack.

In an embodiment, the performance of the second Bluetooth service supported by both the first communication protocol stack and the second communication protocol stack is higher than the performance of the first Bluetooth service supported by the second communication protocol stack in that a data size of the second Bluetooth service supported by both the first communication protocol stack and the second communication protocol stack is greater than a data size of the first Bluetooth service supported by the second communication protocol stack.

In an embodiment, the second Bluetooth service includes at least one of a Bluetooth multimedia service and a Bluetooth internet service, and the first Bluetooth service includes at least one of a communication connection establishment service and a physiological data transmission service.

In an embodiment, the first operating-system running module 840 is further configured to enable, in response to the first instruction, the first operating system to enter an awakened state from a dormant state. In the awakened state of the first operating system, the first communication protocol stack is run on the first operating system, and the second communication protocol stack continues to be run on the second operating system.

In an embodiment, the second operating-system running module 820 is configured to control, in the dormant state of the first operating system, the first communication protocol stack to stop running and the second communication protocol stack to run on the second operating system.

In an embodiment, the first operating-system running module 840 is further configured to determine, based on a service type of a current to-be-processed service, whether the first operating system enters the awakened state from the dormant state. The service type includes a first performance service and a second performance service. The first performance service has a higher performance index than the second performance service.

In an embodiment, the first operating-system running module 840 is further configured to determine, when the to-be-processed service is the first performance service, that the first operating system enters the awakened state from the dormant state, and enable the first communication protocol stack to run on the first operating system and the second communication protocol stack to run on the second operating system; and determine, when the to-be-processed service is the second performance service, that the first operating system is still in the dormant state, and enable the second communication protocol stack to run on the second operating system.

In an embodiment, the first operating-system running module 840 is further configured to transmit the first instruction to the first operating system through the second operating system; and control, in response to the first instruction, the first operating system to enter the awakened state from the dormant state.

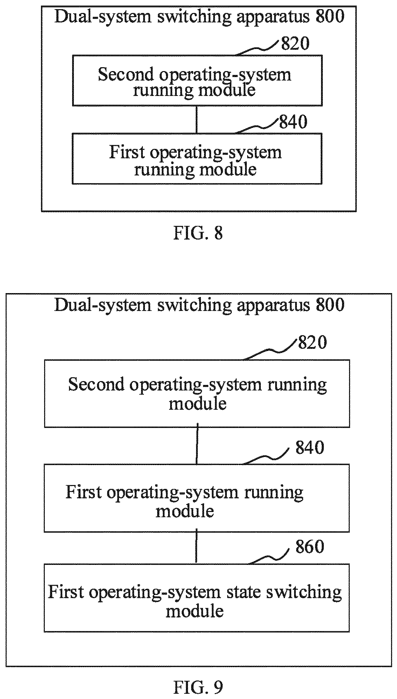

In an embodiment, as illustrated in FIG. 9, a system switching module 800 is provided. The system switching module 800 further includes a first operating-system state switching module 860.

The first operating-system state switching module 860 is configured to determine, based on a service type of a current to-be-processed service, whether the first operating system enters a dormant state from an awakened state, in which the to-be-processed service includes a first performance service and a second performance service, and in which the first performance service has a higher performance index than the second performance service; determine, when the to-be-processed service is the first performance service, that the first operating system is still in the awakened state, and enable the first communication protocol stack to run on the first operating system and the second communication protocol stack to run on the second operating system; and determine, when the to-be-processed service is the second performance service, that the first operating system enters the dormant state from the awakened state, and control the first communication protocol stack to stop running and the second communication protocol stack to run on the second operating system.

In an embodiment, the first operating system is run on a SOC, and the second operating system is run on an MCU.

In an embodiment, power consumption of the first operating system run on the SOC is greater than power consumption of the second operating system run on the MCU.

It should be understood that, although actions in the respective flowcharts described above are illustrated in a sequence indicated by an arrow, these actions are not necessarily executed in the sequence indicated by the arrow. Unless explicitly stated herein, execution of these actions is not strictly limited to the sequence, and these actions can be performed in other sequences. Moreover, at least some of the actions in the above drawings may include several sub-actions or several stages. These sub-actions or stages are not necessarily executed and completed at the same moment, but can be executed at different moments. These sub-actions or stages are also not necessarily executed sequentially one by one, but can be executed in turn or alternately with other actions, or sub-actions of other operations, or at least some of the stages.

The division of the system switching apparatus into various modules is for illustration only. In other embodiments, the system switching apparatus can be divided into different modules as required to complete all or part of the functions of the system switching apparatus.

For specific limitations of the system switching apparatus, reference can be made to limitations of the system switching method, which will not be repeated herein. Each module in the system switching apparatus can be implemented in whole or in part by software, hardware and a combination thereof. The above modules can be embedded in or independent of the processor in the computer device in the form of hardware, or stored in the memory in the computer device in the form of software, such that the processor can invoke and execute actions in blocks corresponding to the above modules.

An embodiment further provides an electronic device. The electronic device includes a memory and a processor. The memory has a computer program stored thereon. The computer program, when being executed by the processor, enables the processor to implement the actions of the system switching method provided in the respective embodiments as described above.

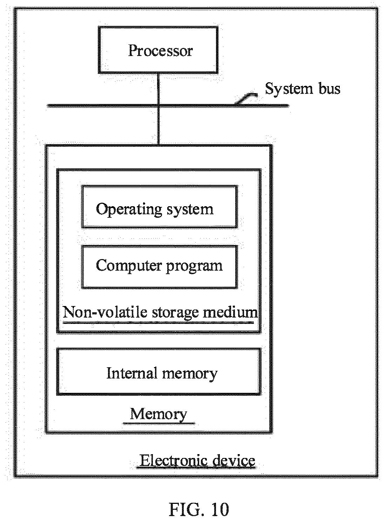

FIG. 10 is a schematic diagram of an internal structure of an electronic device according to an embodiment of the present disclosure. As illustrated in FIG. 10, the electronic device includes a processor and a memory that are connected via a system bus. The processor is configured to provide computing and control capabilities to support the operation of the entire electronic device. The memory may include a non-volatile storage medium and an internal memory. The non-volatile storage medium stores an operating system and a computer program. The computer program can be executed by the processor to implement the system switching method provided in the respective embodiments as described above. The internal memory provides a cache execution environment for the operating system and the computer program in the non-volatile storage medium. The electronic device can be any terminal device such as a mobile phone, a tablet computer, a Personal Digital Assistant (PDA), a Point of Sales (POS), a vehicle-mounted computer, and a wearable device.

The respective modules in the system switching apparatus according to the embodiments of the present disclosure can be embodied in the form of a computer program. The computer program can run on an electronic device or an electronic apparatus. A program module constituted by the computer program can be stored in the electronic device or the memory of the electronic device. The computer program, when executed by the processor, implements the actions in blocks of the methods described in the embodiments of the present disclosure.

The embodiments of the present disclosure further provide a computer-readable storage medium, such as one or more non-volatile computer-readable storage media including computer-executable instructions. The computer-executable instructions, when being executed by one or more processors, cause the one or more processors to perform steps of the system switching method.

A computer program product including instructions, when executed on a computer, causes the computer to perform the system switching method.

Any reference to a memory, a storage, a database, or other media as used herein may include a non-volatile memory and/or a volatile memory. The non-volatile memory may include a Read Only Memory (ROM), a Programmable ROM (PROM), an Electrically Programmable ROM (EPROM), an Electrically Erasable Programmable ROM (EEPROM), or a flash memory. The volatile memory may include a Random Access Memory (RAM) that acts as an external cache memory. By way of illustration, rather than limitation, an RAM is available in various forms such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Rambus Direct RAM (RDRAM), a Direct Rambus Dynamic RAM (DRDRAM), and a Rambus Dynamic RAM (RDRAM).

The above embodiments illustrate merely some implementations of the present disclosure. Although description of the above embodiments is specific and detailed, the description should not be construed as limitations on the scope of the present disclosure. It should be pointed out that, various modifications and improvements can be made by those skilled in the art without departing from the concept of the present disclosure, and they shall fall within the protection scope of the present disclosure as defined by the claims as attached.

## Claims

1. A system switching method, performed by an electronic device comprising a first processor, a second processor, and a Bluetooth module, the first processor being configured to run a first operating system, the second processor being configured to run a second operating system, the first processor being in a communication connection with the second processor, and the Bluetooth module being in a communication connection with the second processor,
the method comprising:
supporting, by the second operating system, a first Bluetooth service when the second operating system is run by the electronic device; and
in response to a first instruction, running, by the electronic device, the first operating system, and supporting, by both the first operating system and the second operating system, the first Bluetooth service when the first operating system is run by the electronic device.

2. The system switching method according to claim 1, wherein a second Bluetooth service is supported by both the first operating system and the second operating system.

3. The method according to claim 2, wherein:
a protocol stack supporting the first Bluetooth service comprises a second communication protocol stack running on the second operating system;
a protocol stack supporting the second Bluetooth service comprises a first communication protocol stack running on the first operating system and the second communication protocol stack running on the second operating system; and
performance of the second Bluetooth service supported by both the first communication protocol stack and the second communication protocol stack is higher than performance of the first Bluetooth service supported by the second communication protocol stack.

4. The method according to claim 3, wherein the performance of the second Bluetooth service supported by both the first communication protocol stack and the second communication protocol stack is higher than the performance of the first Bluetooth service supported by the second communication protocol stack in that:
a data size of the second Bluetooth service supported by both the first communication protocol stack and the second communication protocol stack is greater than a data size of the first Bluetooth service supported by the second communication protocol stack.

5. The method according to claim 4, wherein:
the second Bluetooth service comprises at least one of a Bluetooth multimedia service and a Bluetooth internet service; and
the first Bluetooth service comprises at least one of a communication connection establishment service and a physiological data transmission service.

6. The method according to claim 3, wherein said in response to the first instruction, running, by the electronic device, the first operating system comprises:
enabling, in response to the first instruction, the first operating system to enter an awakened state from a dormant state, wherein in the awakened state of the first operating system, the first communication protocol stack is run on the first operating system, and the second communication protocol stack continues to run on the second operating system.

7. The method according to claim 6, wherein the method comprises, prior to said in response to the first instruction, running, by the electronic device, the first operating system:
controlling, in the dormant state of the first operating system, the first communication protocol stack to stop running and the second communication protocol stack to run on the second operating system.

8. The method according to claim 6, wherein said enabling, in response to the first instruction, the first operating system to enter the awakened state from the dormant state comprises:
determining, based on a service type of a current to-be-processed service, whether the first operating system enters the awakened state from the dormant state, wherein the service type comprises a first performance service and a second performance service, the first performance service having a higher performance index than the second performance service.

9. The method according to claim 8, wherein said determining, based on the service type of the current to-be-processed service, whether the first operating system enters the awakened state from the dormant state comprises:
determining, when the to-be-processed service is the first performance service, that the first operating system enters the awakened state from the dormant state, and enabling the first communication protocol stack to run on the first operating system and the second communication protocol stack to run on the second operating system; and
determining, when the to-be-processed service is the second performance service, that the first operating system is still in the dormant state, and enabling the second communication protocol stack to run on the second operating system.

10. The method according to claim 9, wherein said enabling the first operating system to enter the awakened state from the dormant state comprises:
transmitting the first instruction to the first operating system through the second operating system; and
controlling, in response to the first instruction, the first operating system to enter the awakened state from the dormant state.

11. The method according to claim 1, wherein the method further comprises, subsequent to said in response to the first instruction, running, by the electronic device, the first operating system:
determining, based on a service type of a current to-be-processed service, whether the first operating system enters an awakened state from a dormant state, wherein the to-be-processed service comprises a first performance service and a second performance service, the first performance service having a higher performance index than the second performance service;
determining, when the to-be-processed service is the first performance service, that the first operating system is still in the awakened state, and enabling the first communication protocol stack to run on the first operating system and the second communication protocol stack to run on the second operating system; and
determining, when the to-be-processed service is the second performance service, that the first operating system enters the dormant state from the awakened state, and controlling the first communication protocol stack to stop running and the second communication protocol stack to run on the second operating system.

12. The method according to any one of claims 1 to 11, wherein the first operating system is run on a system-on-a-chip (SOC), and the second operating system is run on a microcontroller unit (MCU).

13. The method according to claim 12, wherein the first operating system run on the SOC has greater power consumption than the second operating system run on the MCU.

14. A system switching apparatus, performed by an electronic device comprising a first processor, a second processor, and a Bluetooth module, the first processor being configured to run a first operating system, the second processor being configured to run a second operating system, the first processor being in a communication connection with the second processor, and the Bluetooth module being in a communication connection with the second processor,
the apparatus comprising:
a second operating-system running module configured to support, by the second operating system, a first Bluetooth service when the second operating system is run by the electronic device; and
a first operating-system running module configured to run, by the electronic device and in response to a first instruction, the first operating system, and support, by both the first operating system and the second operating system, the first Bluetooth service when the first operating system is run by the electronic device.

15. The apparatus according to claim 14, wherein a second Bluetooth service is supported by both the first operating system and the second operating system.

16. The apparatus according to claim 15, wherein
a protocol stack supporting the first Bluetooth service comprises a second communication protocol stack running on the second operating system;
a protocol stack supporting the second Bluetooth service comprises a first communication protocol stack running on the first operating system and the second communication protocol stack running on the second operating system; and
performance of the second Bluetooth service supported by both the first communication protocol stack and the second communication protocol stack is higher than performance of the first Bluetooth service supported by the second communication protocol stack.

17. The apparatus according to claim 16, wherein the performance of the second Bluetooth service supported by both the first communication protocol stack and the second communication protocol stack is higher than the performance of the first Bluetooth service supported by the second communication protocol stack in that:
a data size of the second Bluetooth service supported by both the first communication protocol stack and the second communication protocol stack is greater than a data size of the first Bluetooth service supported by the second communication protocol stack.

18. The apparatus according to claim 17, wherein
the second Bluetooth service comprises at least one of a Bluetooth multimedia service and a Bluetooth internet service; and
the first Bluetooth service comprises at least one of a communication connection establishment service and a physiological data transmission service.

19. An electronic device, comprising:
a memory having a computer program stored thereon; and
a processor,
wherein the processor, when executing the computer program, implements operations of the system switching method according to any one of claims 1 to 13.

20. A computer-readable storage medium, having a computer program stored thereon, wherein the computer program, when executed by a processor, implements operations of the system switching method according to any one of claims 1 to 13.
